# EUROPEAN PATENT APPLICATION

(11) **EP 1 670 153 A2**
(43) Date of publication of application: **14.06.2006**
(21) Application number: 05026741.8
(22) Date of filing: 07.12.2005
(51) Int. Cl.: H04B 1/40

(54) **Wireless multiband transceiver for mobile communication services**

(30) Priority: 07.12.2004 KR 2004102477
(71) Applicant: Samsung Electronics Co., Ltd., Suwon-si, Gyeonggi-Do (KR)
(72) Inventor: Young-II, Son c/o Samsung Electronics Co.,Ltd., Suwon-si,Gyeonggi-do (KR)
(74) Representative: Grünecker, Kinkeldey, Stockmair & Schwanhäusser Anwaltssozietät

(57) **Abstract**

Disclosed is a wireless transmission/reception apparatus for transmitting/receiving signals of multiple frequency bands according to multiple mobile communication services. The apparatus includes a transmission unit having a plurality of transmitters for transmitting the signals of the frequency bands of the mobile communication services through each transmitter, and a reception unit having a plurality of receivers for receiving signals, which correspond to an equal frequency band from among the signals of the frequency bands of the mobile communication services, through at least one receiver for receiving radio signals of different service schemes of the equal frequency band, and receiving signals not corresponding to the equal frequency band through receivers according to each frequency band. The apparatus uses one receiver capable of receiving different service signals of the same frequency band, so that the number of receivers can be reduced. Further, the apparatus enables a duplexer used only in an existing FDD scheme to be also used in a TDD scheme.

## Description

The present invention relates to a wireless transmission/reception apparatus, and more particularly to a wireless transmission/reception apparatus supporting frequency bands according to a plurality of mobile communication services. The present invention further relates to a corresponding control method.

Conventionally, mobile communication services have been provided through different communication service schemes according to countries (or regions) throughout the world. Each of the communication service schemes uses a plurality of frequency bands. For example, a mobile communication service has been provided through a Code Division Multiple Access (CDMA) scheme, a Global System for Mobile communications (GSM) scheme, a Wideband CDMA (WCDMA) scheme, etc., according to each country (or region). The CDMA scheme uses a frequency band of 800 MHz, 1800 MHz and 1900 MHz, the GSM scheme uses a frequency band of 850 MHz and 900 MHz, and a frequency band of 1800 MHz and 1900 MHz, and the WCDMA scheme uses a frequency band of 850 MHz, 1900 MHz and 2000 MHz.

Each of the conventional mobile communication terminals use signals of about one or two frequency bands corresponding to a communication service desired by each terminal among the mobile communication services. Each of the conventional mobile communication terminals has no choice but to use only one or two mobile communication services among various mobile communication services provided to all countries around the world. Accordingly, when users travel on business or take a trip to a region to which different communication services are being provided, the users can't use the original mobile communication terminal. Therefore, the users are inconvenienced.

Accordingly, users desire a mobile communication terminal capable of using all mobile communication services provided to all countries around the world. Further, mobile communication terminal manufacturers are also making an effort to manufacture a mobile communication terminal capable of using all mobile communication services provided to all countries according to customer demand. In order to use all mobile communication services provided to all countries and frequency bands according to each service, it is necessary to provide a wireless transceiver capable of supporting all frequency bands according to a plurality of communication services.

A recently developed wireless transmission/reception apparatus, which supports mobile communication services and all frequency bands according to each service, must include a transceiver for each frequency band and each service. Therefore, the number of the transceivers increases, so the cost of the wireless transceiver also increases. Further, the wireless transceiver includes each transceiver corresponding to frequency bands according to each service, so that the size and weight of the wireless transmission/reception apparatus increases. Therefore, it is not commercially reasonable to apply this wireless transmission/reception apparatus to a portable terminal.

Accordingly, the present invention has been made to solve at least the above-mentioned problems occurring in the prior art.

It is the object of the present invention to provide a wireless transmission/reception apparatus, which can support multiple frequency bands of multiple mobile communication services by means of a wireless transceiver for providing different kinds of services of the same frequency band.

This object is solved by the subject matter of the independent claims.

Preferred embodiments are defined in the dependent claims.

It is an aspect of the present invention to provide a wireless transmission/reception apparatus, which can support multiple frequency bands of multiple mobile communication services by means of a wireless transceiver for providing different kinds of services of the same frequency band and simultaneously supporting diversity.

It is another aspect of the present invention to provide a control method for controlling the above-mentioned wireless transmission/reception apparatus.

In order to accomplish the above, according to one aspect of the present invention, there is provided a wireless transmission/reception apparatus for transmitting/receiving signals of multiple frequency bands according to multiple mobile communication services, the wireless transmission/reception apparatus including a transmission unit having a plurality of transmitters for transmitting the signals of the frequency bands of the mobile communication services through each transmitter; and a reception unit having a plurality of receivers for receiving signals, which correspond to an equal frequency band from among the signals of the frequency bands of the mobile communication services, through at least one receiver for receiving radio signals of different service schemes of the equal frequency band, and receiving signals not corresponding to the equal frequency band from among the signals of the frequency bands according to the mobile communication services through receivers according to each frequency band.

The present invention will be more apparent from the following detailed description taken in conjunction with the accompanying drawings, in which:
FIG. 1 is a block diagram of a wireless transmission/reception apparatus according to an embodiment of the present invention;
FIG. 2 is a diagram illustrating one example of services and frequency bands supported by a wireless transmission/reception apparatus according to an embodiment of the present invention;
FIG. 3 is a detailed circuit diagram of a wireless transmission/reception apparatus according to a first embodiment of the present invention;
FIG. 4 is a detailed circuit diagram of a wireless transmission/reception apparatus according to a second embodiment of the present invention; and
FIG. 5 is a detailed circuit diagram of a wireless transmission/reception apparatus according to a third embodiment of the present invention.

Preferred embodiments of the present invention will be described in detail herein below with reference to the accompanying drawings. In the following description, a detailed description of known functions and configurations incorporated herein will be omitted when it may obscure the subject matter of the present invention.

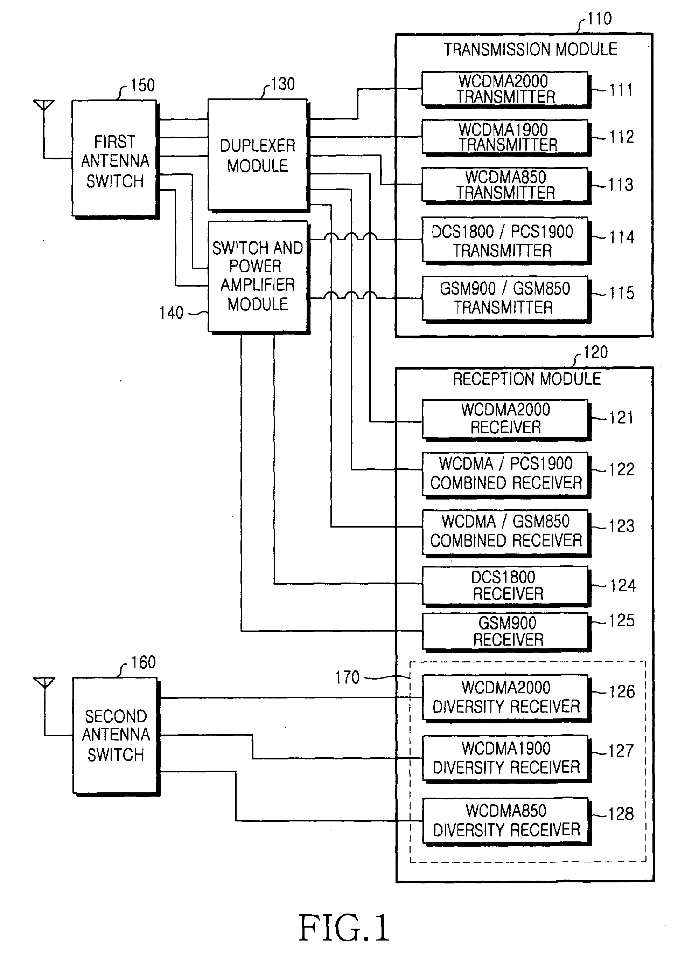

FIG. 1 is a block diagram of a wireless transmission/reception apparatus according to an embodiment of the present invention. FIG. 1 shows one example of the wireless transceiver which supports a WCDMA 2000 MHz band, a WCDMA 1900 MHz band and a WCDMA 850MHz band corresponding to a WCDMA service, a GSM 850MHz band and a GSM 900 MHz band corresponding to a GSM service, a DCS 1800 MHz band, and a PCS 1900 MHz band.

Referring to FIG. 1, the wireless transmission/reception apparatus according to the embodiment of the present invention includes a transmission module 110, a reception module 120, a duplexer module 130, a switch and power amplifier module 140, a first antenna switch 150, and a second antenna switch 160.

The transmission module 110 includes transmitters for each service and each frequency band, and transmits signals corresponding to a corresponding service and frequency band through each transmitter. For example, the transmission module 110 may include a WCDMA 2000 transmitter 111, a WCDMA 1900 transmitter 112 and a WCDMA 850 transmitter 113 for transmitting radio signals of a Frequency Division Duplex (FDD) scheme, and a DCS 1800/PCS 1900 transmitter 114 and a GSM 850/GSM 900 115 for transmitting radio signals of a Time Division Duplex (TDD) scheme. The transmission module 110 transmits signals of the WCDMA 2000 MHz band through the WCDMA 2000 transmitter 111, transmits signals of the WCDMA 1900 MHz band through the WCDMA 1900 transmitter 112, and transmits signals of the WCDMA 850MHz band through the WCDMA 850 transmitter 113. Further, the transmission module 110 transmits signals of the DCS 1800 MHz band and the PCS 1900 MHz band through the DCS 1800/PCS 1900 transmitter 114, and transmits signals of the GSM 850MHz band and the GSM 900 MHz band through the GSM 850/GSM 900 115.

The reception module 120 includes receivers for each service and each frequency band, and particularly includes receivers capable of using different services of the same frequency band. Further, the reception module 120 includes diversity receivers 170 for supporting WCDMA diversity.

For example, the reception module 120 may include a WCDMA 2000 receiver 121, a receiver 122 for both WCDMA and PCS 1900, a receiver 123 for both WCDMA and GSM 850, a DCS 1800 receiver 124, a GSM 900 receiver 125, a WCDMA 2000 diversity receiver 126, a WCDMA 1900 diversity receiver 127, and a WCDMA 850 diversity receiver 128.

The receiver 122 for both WCDMA and PCS 1900 and the receiver 123 for both WCDMA and GSM 850 are receivers capable of receiving different service signals in the same frequency band. The WCDMA 2000 diversity receiver 126, the WCDMA 1900 diversity receiver 127 and the WCDMA 850 diversity receiver 128 are diversity receivers for supporting the WCDMA diversity.

The reception module 120 receives signals of each frequency band corresponding to each service. That is, the reception module 120 receives the signals of the WCDMA 2000 MHz band through the WCDMA 2000 receiver 121, receives the signals of the DCS 1800 MHz band through the DCS 1800 receiver 124, and receives the signals of the signals of the GSM 900 MHz band through the GSM 900 receiver 125. Further, the reception module 120 receives the different service signals in the same frequency band through the receiver 122 for both WCDMA and PCS 1900 and the receiver 123 for both WCDMA and GSM 850. That is, the reception module 120 receives the signals of the WCDMA 1900 MHz band or the PCS 1900 MHz band through the receiver 122 for both WCDMA and PCS 1900; and receives the signals of the WCDMA 850 MHz band or the GSM 850MHz band through the receiver 123 for both WCDMA and GSM 850. Furthermore, the reception module 120 receives diversity signals of the WCDMA 2000 MHz band through the WCDMA 2000 diversity receiver 126, receives diversity signals of the WCDMA 1900 MHz band through the WCDMA 1900 diversity receiver 127, and receives diversity signals of the WCDMA 850 MHz band through the WCDMA 850 diversity receiver 128.

The duplexer module 130 is connected to the WCDMA 2000 transmitter 111, the WCDMA 1900 transmitter 112 and the WCDMA 850 transmitter 113, which use the FDD scheme, from among the transmitters of the transmission module 110. Further, the duplexer module 130 is connected to the WCDMA 2000 receiver 121 using the FDD scheme, the receiver 122 for both WCDMA and PCS 1900 and the receiver 123 for both WCDMA and GSM 850, which use both the FDD scheme and the TDD scheme, from among the receives of the reception module 120. Further, the duplexer module 130 separates transmission signals output from the transmitters 111 to 113 from reception signals corresponding to the WCDMA 2000 receiver 121, the receiver 122 for both WCDMA and PCS 1900 and the receiver 123 for both WCDMA and GSM 850. In the prior art, a duplexer module has been used for separating transmission signals from reception signals only for WCDMA signals that employ the FDD scheme using different frequency bands in an uplink and a downlink. However, in the embodiment of the present invention, the duplexer module 130 also functions as a filter for the reception module 120 for both the FDD scheme and the TDD scheme because signals (WCDMA signals) of the FDD scheme and signals (GSM 850 or PCS 1900 signals) of the TDD scheme are received in the receivers 122 or 123.

The switch and power amplifier module 140 is connected to the DCS 1800/PCS 1900 transmitter 114 and the GSM 850/GSM 900 115 of the transmitters in the transmission module 110, and is connected to the DCS 1800 receiver 124 and the GSM 900 receiver 125 of the receivers in the reception module 120. The switch and power amplifier module 140 separates transmission signals output from the DCS 1800/PCS 1900 transmitter 114 and the GSM 850/GSM 900 115 from reception signals corresponding to the DCS 1800 receiver 124 and the GSM 900 receiver 125. Further, the switch and power amplifier module 140 selects a frequency band to be transmitted between the DCS 1800 MHz band and the PCS 1900 MHz band supported by the DCS 1800/PCS 1900 transmitter 114, and selects a frequency band to be transmitted between the GSM 850MHz band and the GSM 900MHz band supported by the GSM 850/GSM 900 115. Furthermore, the switch and power amplifier module 140 amplifies power of the transmission signals of the DCS 1800 MHz band and the PCS 1900 MHz band output from the DCS 1800/PCS 1900 transmitter 114, and amplifies power of the transmission signals of the GSM 850MHz band and the GSM 900MHz band output from the GSM 850/GSM 900 115.

The first antenna switch 150 is connected to the duplexer module 130 and the switch and power amplifier module 140, performs a switching between an antenna and the duplexer module 130, and performs a switching between the antenna and the switch and power amplifier module 140.

The second antenna switch 160 is connected to the diversity receivers 126 to 128, and performs a switching between the antenna and the diversity receivers 126 to 128.

According to the embodiment of the present invention, the wireless transmission/reception apparatus having the construction as described above uses one receiver capable of receiving different service signals of the same frequency band, and the duplexer used only in the existing FDD scheme (e.g., WCDMA scheme) is also used in the TDD scheme (e.g., GSM 850 or PCS 1900 scheme), so that the number of receivers can be reduced as compared with the number of receivers in an existing wireless transmission/reception apparatus.

The wireless transmission/reception apparatus according to the embodiment of the present invention may also be embodied so as to support all mobile communication services and frequency bands used around the world, or may also be embodied so as to support mobile communication services and frequency bands used in a specific region (or country).

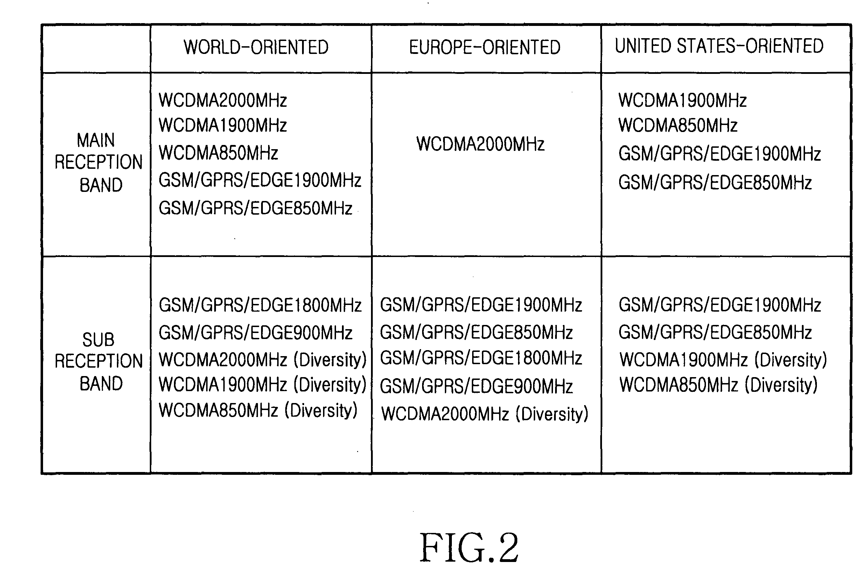

FIG. 2 is a diagram illustrating one example of services and frequency bands supported by the wireless transmission/reception apparatus according to the embodiment of the present invention. Referring to FIG. 2, the world type shows a case where the wireless transmission/reception apparatus according to the embodiment of the present invention supports all mobile communication services and frequency bands used around the world. The European type shows a case where the wireless transmission/reception apparatus according to the embodiment of the present invention supports mobile communication services and frequency bands used in Europe. The USA type shows a case where the wireless transmission/reception apparatus according to the embodiment of the present invention supports mobile communication services and frequency bands used in USA.

First, a case where the wireless transmission/reception apparatus according to a first embodiment of the present invention is embodied in the world type will be described. When the wireless transmission/reception apparatus is embodied in the world type, a WCDMA 2000 MHz band, a WCDMA 1900 MHz band, a WCDMA 850 MHz band, a GSM/GPRS/EDGE 1900 MHz band and a GSM/GPRS/EDGE 850 MHz band, which are mainly used throughout the world, are used as a main reception band. Further, a GSM/GPRS/EDGE 1800 MHz band, a GSM/GPRS/EDGE 900 MHz band and a diversity band are used as a sub-reception band.

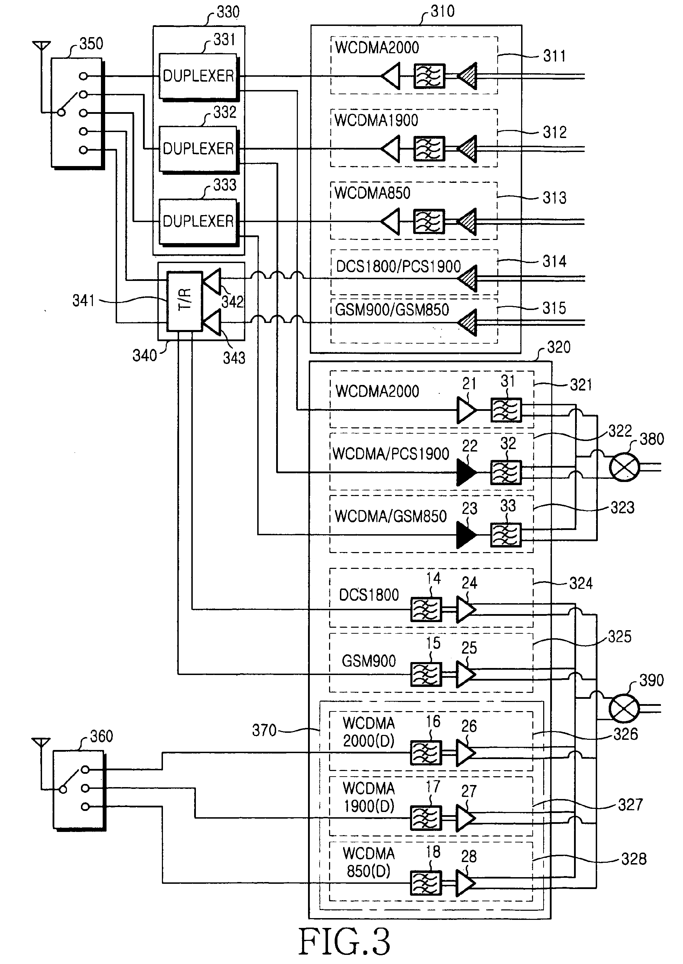

FIG. 3 is a detailed circuit diagram of the wireless transmission/reception apparatus embodied in the world type according to the first embodiment of the present invention.

Referring to FIG. 3, a transmission unit 310 includes a WCDMA 2000 transmitter 311, a WCDMA 1900 transmitter 312 and a WCDMA 850 transmitter 313 for transmitting radio signals of the FDD scheme, and a DCS 1800/PCS 1900 transmitter 314 and a GSM 900/GSM 850 transmitter 315 for transmitting radio signals of the TDD scheme. Each of the transmitters 311 to 315 includes a Pre-Power Amplifier (PPA) for amplifying power of transmission signals.

A reception unit 320 includes receivers for receiving signals of the WCDMA 2000 MHz band, the WCDMA 1900 MHz band, the WCDMA 850 MHz band, the GSM/GPRS/EDGE (PCS) 1900 MHz band, the GSM/GPRS/EDGE (GSM) 850 MHz band, the GSM/GPRS/EDGE 1800 MHz band and the GSM/GPRS/EDGE 900 MHz band, which are used around the world. The reception unit 320 includes a separate receiver for receiving signals according to each service and each frequency band as described above. Further, the reception unit 320 uses a receiver for both the PCS 1900 MHz band corresponding to the WCDMA 1900 MHz band and the GSM/GPRS/EDGE 1900 MHz band, and the GSM 850 MHz band corresponding to the WCDMA 850 MHz band and the GSM/GPRS/EDGE 850 MHz band. Herein, the WCDMA 1900 MHz band and the GSM/GPRS/EDGE 1900 MHz band provide different services but correspond to the same frequency band, and the WCDMA 850 MHz band and the GSM/GPRS/EDGE 850 MHz band provide different services but correspond to the same frequency band. Further, the reception unit 320 includes diversity receivers for supporting diversity of the WCDMA 2000 MHz band, the WCDMA 1900 MHz band and the WCDMA 850 MHz band.

Accordingly, the reception unit 320 may include a WCDMA 2000 receiver 321, a receiver 322 for both WCDMA and PCS 1900, a receiver 323 for both WCDMA and GSM 850, a DCS 1800 receiver 324, a GSM 900 receiver 325, a WCDMA 2000 diversity receiver 326, a WCDMA 1900 diversity receiver 327, and a WCDMA 850 diversity receiver 328.

The WCDMA 2000 receiver 321 includes a first Low Noise Amplifier (LNA) 21 for amplifying low signals received through an antenna according to a WCDMA 2000 service scheme, and a first SAW filter 31 for filtering WCDMA 2000 MHz signals from the reception signals amplified by the first LNA 21.

The receiver 322 for both WCDMA and PCS 1900 includes a second LNA 22 for amplifying low signals received through the antenna according to a WCDMA 1900 service scheme or a GSM/GPRS/EDGE 1900 service scheme, i.e., a PCS 1900 service scheme. Further, the receiver 322 includes a second SAW filter 32 for filtering WCDMA 1900 MHz signals or PCS 1900 MHz signals from the reception signals amplified by the second LNA 22.

The receiver 323 for both WCDMA and GSM 850 includes a third LNA 23 for amplifying low signals received through a main antenna according to a WCDMA 850 service scheme or a GSM/GPRS/EDGE 850 service scheme, i.e., a GSM 850 service scheme. Further, the receiver 323 includes a third SAW filter 32 for filtering WCDMA 850 MHz signals or GSM 850 MHz signals from the reception signals amplified by the third LNA 23.

The DCS 1800 receiver 324 includes a band pass filter 14 for passing reception signals of DCS 1800 MHz band received through the main antenna and preventing leakage signals due to transmission signals from passing, and a fourth LNA 24 for amplifying the reception signals of the DCS 1800 MHz band.

The GSM 900 receiver 325 includes a band pass filter 15 for passing reception signals of GSM 900 MHz band received through the main antenna and preventing leakage signals due to transmission signals from passing, and a fifth LNA 25 for amplifying the reception signals of the GSM 900 MHz band.

Each of the diversity receivers 326 to 328 includes a band pass filter 16, 17 or 18 for passing diversity signals received through a sub-antenna and preventing leakage signals due to transmission signals from passing, and a LNA 26, 27 or 28 for amplifying the diversity signals.

A duplexer unit 330 includes a first duplexer 331 connected to the WCDMA 2000 transmitter 311 and the WCDMA 2000 receiver 321, a second duplexer 332 connected to the WCDMA 1900 transmitter 312 and the receiver 322 for both WCDMA and PCS 1900, and a third duplexer 333 connected to the WCDMA 850 transmitter 313 and the receiver 323 for both WCDMA and GSM 850. The first duplexer 331 outputs transmission signals of the WCDMA 2000 MHz band, which are output from the WCDMA 2000 transmitter 311, to the antenna, and outputs reception signals of the WCDMA 2000 MHz band to the WCDMA 2000 receiver 321. The second duplexer 332 outputs transmission signals of the WCDMA 1900 MHz band, which are output from the WCDMA 1900 transmitter 312, to the main antenna, and outputs reception signals of the WCDMA/PCS 1900 MHz band to the receiver 322 for both WCDMA and PCS 1900. The third duplexer 333 outputs transmission signals of the WCDMA 850 MHz band, which are output from the WCDMA 850 transmitter 313, to the main antenna, and outputs reception signals of the WCDMA/GSM 8500 MHz band to the receiver 323 for both WCDMA and GSM 850.

A switch and power amplifier module 340 is connected to the DCS 1800/PCS 1900 transmitter 314 and the GSM 900/GSM 850 transmitter 315 of the transmitters in the transmission unit 310, and is connected to the DCS 1800 receiver 324 and the GSM 900 receiver 325 of the receivers in the reception unit 320. The switch and power amplifier module 340 includes a transmission/reception and band selection switch 341 for transmitting/receiving signals and selecting bands for the signals, and a first power amplifier 342 and a second power amplifier 343 for amplifying power of the transmission signals.

The transmission/reception and band selection switch 341 performs a switching for selectively outputting transmission signals of the DCS 1800/PCS 1900 MHz band, which are output from the DCS 1800/PCS 1900 transmitter 314, and transmission signals of the GSM 850/GSM 900 MHz band, which are output from the GSM 900/GSM 850 transmitter 315, to the antenna. Further, the transmission/reception and band selection switch 341 performs a switching for outputting reception signals of the DCS 1800 MHz band received through the main antenna to the corresponding DCS 1800 receiver 324, and outputting reception signals of the GSM 900 MHz band received through the main antenna to the GSM 900 receiver 325. Furthermore, the transmission/reception and band selection switch 341 performs a switching for selecting a frequency band to be transmitted of the DCS 1800 MHz band and the PCS 1900 MHz band supported by the DCS 1800/PCS 1900 transmitter 314, and selecting a frequency band to be transmitted of the GSM 850 MHz band and the GSM 900 MHz band supported by the GSM 900/GSM 850 transmitter 315. The first power amplifier 342 amplifies power of the transmission signals of the DCS 1800 MHz band and the PCS 1900 MHz band output from the DCS 1800/PCS 1900 transmitter 314. The second power amplifier 343 amplifies power of the transmission signals of the GSM 850 MHz band and the GSM 900 MHz band output from the GSM 900/GSM 850 transmitter 315.

A first antenna switch 350 is connected to the duplexer unit 330 and the switch and power amplifier module 340, performs a switching between the main antenna and the duplexer unit 330, and performs a switching between the main antenna and the switch and power amplifier module 340.

A second antenna switch 360 is connected to the diversity receivers 326 to 328, and performs a switching between the sub-antenna and the diversity receivers 326 to 328.

A first mixer 380 is connected to the WCDMA 2000 receiver 321, the receiver 322 for both WCDMA and PCS 1900 and the receiver 323 for both WCDMA and GSM 850 for receiving the signals of the main reception band, and converts high-band frequencies received in the receivers 321 to 323 into low-band frequencies.

A second mixer 390 is connected to the DCS 1800 receiver 324, the GS M 900 receiver 325 and the diversity receivers 326 to 328 for receiving the signals of the sub-reception band, and converts high-band frequencies received in the receivers 324 to 328 into low-band frequencies.

The wireless transmission/reception apparatus according to the first embodiment of the present invention uses the receivers capable of receiving the signals of different services (WCDMA/GSM/GPRS/EDGE) of the same frequency band (1900 MHz or 850 MHz). The receiver 322 for both WCDMA and PCS 1900 and the receiver 323 for both WCDMA and GSM 850 from among the receivers in the reception unit 320 are the receivers. When the second LNA 22 of the receiver 322 for both WCDMA and PCS 1900 receives WCDMA 1900 signals, the second LNA 22 amplifies the received WCDMA 1900 signals according to a WCDMA 1900 service scheme. Further, when the second LNA 22 receives PCS 1900 signals, the second LNA 22 amplifies the received PCS 1900 signals according to a PCS 1900 service scheme. When the third LNA 23 of the receiver 323 for both WCDMA and GSM 850 receives WCDMA 850 signals, the third LNA 23 amplifies the received WCDMA 850 signals according to a WCDMA 850 service scheme. Further, when the third LNA 23 receives GSM 850 signals, the third LNA 23 amplifies the received GSM 850 signals according to a GSM 850 service scheme.

In the prior art, because a LNA amplifying only reception signals of a single service scheme is used, separate LNAs must be used for each service. Therefore, it is inevitable to separately include receivers according to each service. However, the embodiment of the present invention uses the LNAs 22 and 23 capable of amplifying reception signals (WCDMA signals or PCS signals, WCDMA signals or GSM signals) of different service schemes in the same band as described above, so that the number of the LNAs is reduced and it is not necessary to include separate receivers according to each service.

Further, the SAW filters improve noise characteristics deteriorated by a single-to-differential structure, thereby further enhancing receiver sensitivity. Accordingly, the wireless transmission/reception apparatus according to the first embodiment of the present invention allows the receivers 321 to 323 corresponding to the WCDMA 2000 MHz band, the WCDMA 1900 MHz band and the WCDMA 850 MHz band to use the SAW filters 31 to 33 respectively, thereby further enhancing the receiver sensitivity of the main reception band.

Further, the wireless transmission/reception apparatus according to the first embodiment of the present invention uses one mixer 380 obtained by integrating mixers necessary for the receivers 321 to 323 of the main reception band and one mixer 390 obtained by integrating mixers necessary for the receivers 324 to 328 of the sub-reception band, thereby reducing the number of the mixers.

In the first embodiment of the present invention, the wireless transmission/reception apparatus supporting the mobile communication services and the frequency bands used around the world is described as one example. However, because the communication services of the WCDMA 1900 MHz band and the WCDMA 850 MHz band are not provided in Europe, the wireless transceiver of the WCDMA 1900 MHz band and the WCDMA 850 MHz band is not necessary in Europe.

Accordingly, a second embodiment of the present invention provides a wireless transmission/reception apparatus supporting a wireless transceiver of the WCDMA 2000 MHz band, the PCS 1900 MHz band, the DCS 1800 MHz band, the GSM 900 MHz band and the GSM 850 MHz band which are used in Europe.

As illustrated in FIG. 2, in Europe, the WCDMA 2000 MHz band is the main reception band, and the PCS 1900 MHz band, the DCS 1800 MHz band, the GSM 900 MHz band and the GSM 850 MHz band are the sub-reception bands. Accordingly, the wireless transmission/reception apparatus according to the second embodiment of the present invention describes a case where a WCDMA 2000 receiver is used as a main receiver, and a PCS 1900 receiver, a DCS 1800 receiver, a GSM 900 receiver, a GSM 850 receiver and a diversity receiver are used as sub-receivers.

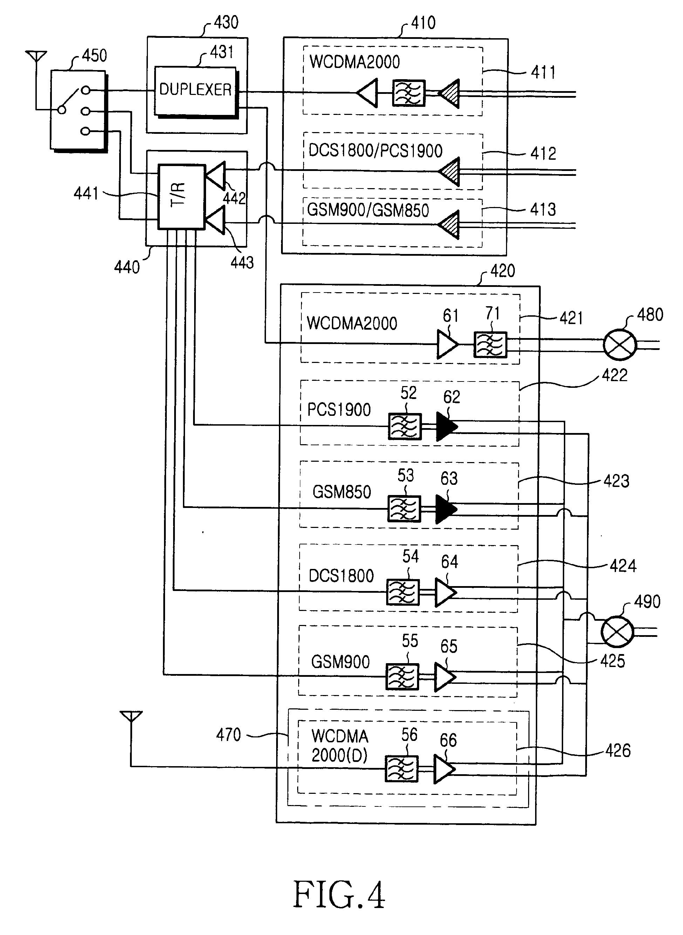

FIG. 4 is a detailed circuit diagram of the wireless transmission/reception apparatus according to the second embodiment of the present invention.

Referring to FIG. 4, a transmission unit 410 of the wireless transmission/reception apparatus according to the second embodiment of the present invention includes a WCDMA 2000 transmitter 411, a DCS 1800/PCS 1900 transmitter 412, and a GSM 900/GSM 850 transmitter 413. Each of the transmitters 411 to 413 outputs transmission signals corresponding to a service and a frequency band of each of the transmitters 411 to 413.

A reception unit 420 includes receivers for receiving signals of the WCDMA 2000 MHz band, the GSM/GPRS/EDGE (PCS) 1900 MHz band, the GSM/GPRS/EDGE (GSM) 850 MHz band, the GSM/GPRS/EDGE (DCS) 1800 MHz band and the GSM/GPRS/EDGE (GSM) 900 MHz band.

According to the second embodiment of the present invention, the reception unit 420 may include a WCDMA 2000 receiver 421, a PCS 1900 receiver 422, a GSM 850 receiver 423, a DCS 1800 receiver 424, a GSM 900 receiver 425 and a WCDMA 2000 (D) diversity receiver 426.

The WCDMA 2000 receiver 421 includes a LNA 61 for amplifying low signals received through a main antenna according to a WCDMA 2000 service, and a SAW filter 71 for filtering WCDMA 2000 MHz signals in the reception signals amplified by the LNA 61.

The PCS 1900 receiver 422 includes a band pass filter 52 for passing reception signals of PCS 1900 MHz band received through the main antenna and preventing leakage signals due to transmission signals from passing, and a LNA 62 for amplifying the reception signals of the PCS 1900 MHz band. The LNA 62 is a LNA for amplifying both the signals of the WCDMA 1900 MHz band and the signals of the PCS 1900 MHz band. However, in the European type according to the second embodiment of the present invention, the LNA 62 operates in order to amplify only the signals of the PCS 1900 MHz band because it is not necessary to receive the signals of the WCDMA 1900 MHz band.

The GSM 850 receiver 423 includes a band pass filter 53 for passing reception signals of GSM 850 MHz band received through the main antenna and preventing leakage signals due to transmission signals from passing, and a LNA 63 for amplifying the reception signals of the GSM 850 MHz band. The LNA 63 is a LNA for amplifying both the signals of the WCDMA 850 MHz band and the signals of the GSM 850 MHz band. However, in the European type according to the second embodiment of the present invention, the LNA 63 operates in order to amplify only the signals of the GSM 850 MHz band because it is not necessary to receive the signals of the WCDMA 850 MHz band.

The DCS 1800 receiver 424 includes a band pass filter 54 for passing reception signals of DCS 1800 MHz band received through the main antenna and preventing leakage signals due to transmission signals from passing, and a LNA 64 for amplifying the reception signals of the DCS 1800 MHz band.

The GSM 900 receiver 425 includes a band pass filter 55 for passing reception signals of GSM 900 MHz band received through the main antenna and preventing leakage signals due to transmission signals from passing, and a LNA 65 for amplifying the reception signals of the GSM 900 MHz band.

The WCDMA 2000 diversity receiver 426 includes a band pass filter 56 for passing diversity signals of the WCDMA 2000 MHz band received through a sub-antenna and preventing leakage signals due to transmission signals from passing, and a LNA 66 for amplifying the diversity signals.

A duplexer unit 430 includes a duplexer 431 connected to the WCDMA 2000 transmitter 411 and the WCDMA 2000 receiver 421. The duplexer 431 outputs transmission signals of the WCDMA 2000 MHz band, which are output from the WCDMA 2000 transmitter 411, to the main antenna, and outputs reception signals of the WCDMA 2000 MHz band to the WCDMA 2000 receiver 421.

A switch and power amplifier module 440 is connected to the DCS 1800/PCS 1900 transmitter 412 and the GSM 900/GSM 850 transmitter 413 of the transmission unit 410, and is connected to the PCS 1900 receiver 422, the GSM 850 receiver 423, the DCS 1800 receiver 424, and the GSM 900 receiver 425 of the reception unit 420. The switch and power amplifier module 440 includes a transmission/reception and band selection switch 441 for transmitting/receiving signals and selecting bands for the signals, and a first power amplifier 442 and a second power amplifier 443 for amplifying power of the transmission signals.

The transmission/reception and band selection switch 441 separates transmission signals output from the DCS 1800/PCS 1900 transmitter 412 and the GSM 900/GSM 850 transmitter 413 from reception signals corresponding to the PCS 1900 receiver 422, the GSM 850 receiver 423, the DCS 1800 receiver 424, and the GSM 900 receiver 425. Further, the transmission/reception and band selection switch 441 selects a frequency band to be transmitted of the DCS 1800 MHz band and the PCS 1900 MHz band supported by the DCS 1800/PCS 1900 transmitter 412, and selects a frequency band to be transmitted of the GSM 850 MHz band and the GSM 900 MHz band supported by the GSM 900/GSM 850 transmitter 413. The first power amplifier 442 amplifies power of the transmission signals of the DCS 1800 MHz band and the PCS 1900 MHz band output from the DCS 1800/PCS 1900 transmitter 412. The second power amplifier 443 amplifies power of the transmission signals of the GSM 850 MHz band and the GSM 900 MHz band output from the GSM 900/GSM 850 transmitter 413.

A first antenna switch 450 is connected to the duplexer unit 430 and the switch and power amplifier module 440, performs a switching among the main antenna, the duplexer unit 430 and the switch and power amplifier module 440.

A first mixer 480 is connected to the WCDMA 2000 receiver 421 for receiving signals of the main reception band, and converts high-band frequencies received through WCDMA 2000 receiver 421 into low-band frequencies.

A second mixer 490 is connected to the PCS 1900 receiver 422, the GSM 850 receiver 423, the DCS 1800 receiver 424, the GSM 900 receiver 425 and the WCDMA 2000 (D) diversity receiver 426 for receiving signals of the sub-reception band, and converts high-band frequencies received through the receivers 422 to 426 into low-band frequencies.

In the wireless transmission/reception apparatus according to the second embodiment of the present invention as described above, the LNA 62 is a LNA for amplifying both the WCDMA 1900 MHz signals and the PCS 1900 MHz signals. However, the LNA 62 is used for amplifying only the PCS 1900 MHz signals because the WCDMA 1900 MHz signals are not used. Further, the LNA 63 is a LNA for amplifying both the WCDMA 850 MHz signals and the GSM 850 MHz signals. However, the LNA 63 is used for amplifying only the GSM 850 MHz signals because the WCDMA 850 MHz signals are not used.

As described above, the wireless transmission/reception apparatus according to the second embodiment of the present invention uses the SAW filter 71 in the WCDMA 2000 receiver 421, thereby further enhancing receiver sensitivity of the WCDMA 2000 MHz band (main reception band). Further, the wireless transmission/reception apparatus according to the second embodiment of the present invention uses one mixer 480 necessary for the receiver 421 of the main reception band and one mixer 490 obtained by integrating mixers necessary for the receivers 422 to 426 of the sub-reception band, thereby reducing the number of the mixers.

As illustrated in FIG. 2, in the USA, the WCDMA 1900 MHz band, the WCDMA 850 MHz band, the GSM/GPRS/EDGE (PCS) 1900 MHz band, the GSM/GPRS/EDGE (GSM) 850 MHz band are the main reception bands, and the GSM/GPRS/EDGE (DCS) 1800 MHz band and the GSM/GPRS/EDGE (GSM) 900 MHz band are the sub-reception bands. Accordingly, the wireless transmission/reception apparatus according to a third embodiment of the present invention describes a case where a WCDMA 1900 receiver, a WCDMA 850 receiver, a PCS 1900 receiver and a GSM 850 receiver are used as main receivers, and a DCS 1800 receiver, a GSM 900 receiver and a diversity receiver are used as sub-receivers.

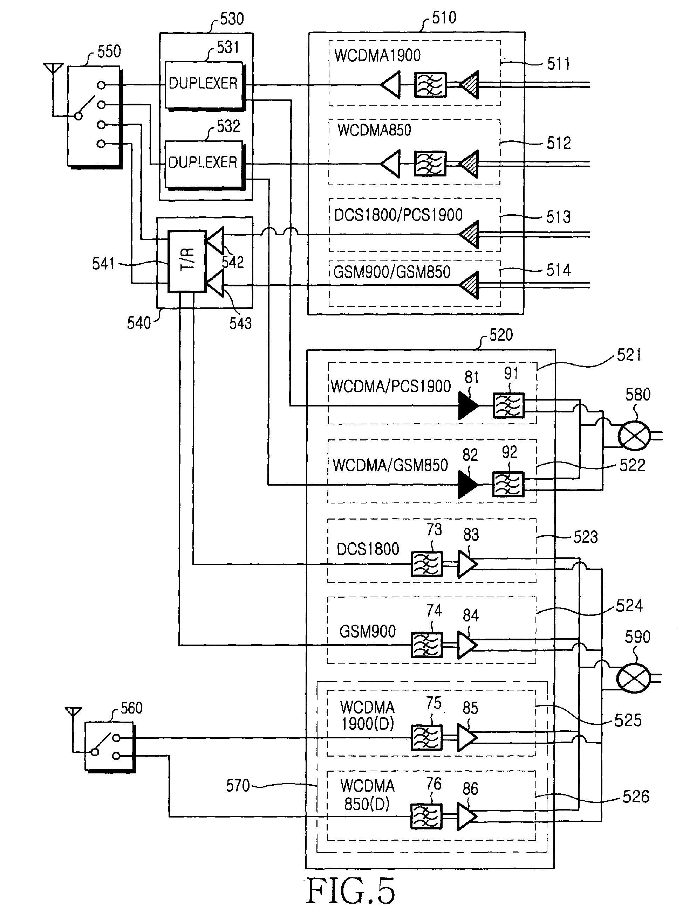

FIG. 5 is a detailed circuit diagram of the wireless transmission/reception apparatus according to the third embodiment of the present invention.

Referring to FIG. 5, a transmission unit 510 of the wireless transmission/reception apparatus according to the third embodiment of the present invention includes a WCDMA 1900 transmitter 511, a WCDMA 850 transmitter 512, a DCS 1800/PCS 1900 transmitter 513 and a GSM 900/GSM 850 transmitter 514. Each of the transmitters 511 to 514 outputs transmission signals corresponding to a service and a frequency band of each of the transmitters 511 to 514.

A reception unit 520 includes receivers for receiving signals of the WCDMA 1900 MHz band, the WCDMA 850 MHz band, the GSM/GPRS/EDGE (PCS) 1900 MHz band, the GSM/GPRS/EDGE (GSM) 850 MHz band, the GSM/GPRS/EDGE (DCS) 1800 MHz band and the GSM/GPRS/EDGE (GSM) 900 MHz band, and receiving diversity signals of the WCDMA 1900 MHz band and the WCDMA 850 MHz band.

The reception unit 520 may include a receiver 521 for both WCDMA and PCS 1900, a receiver 522 for both WCDMA and GSM 850, a DCS 1800 receiver 523, a GSM 900 receiver 524, a WCDMA 1900 (D) diversity receiver 525 and a WCDMA 850 (D) diversity receiver 526.

The receiver 521 for both WCDMA and PCS 1900 includes a LNA 81 for amplifying low signals received through a main antenna according to a WCDMA 1900 service scheme or a GSM/GPRS/EDGE (PCS) 1900 service scheme. Further, the receiver 521 includes a SAW filter 91 for filtering WCDMA 1900 MHz signals or PCS 1900 MHz signals from the reception signals amplified by the LNA 81.

The receiver 522 for both WCDMA and GSM 850 includes a LNA 82 for amplifying low signals received through the main antenna according to a WCDMA 850 service scheme or a GSM/GPRS/EDGE (GSM) 850 service scheme. Further, the receiver 522 includes a SAW filter 92 for filtering WCDMA 850 MHz signals or GSM 850 MHz signals from the reception signals amplified by the LNA 82.

The DCS 1800 receiver 523 includes a band pass filter 73 for passing reception signals of DCS 1800 MHz band received through the main antenna and preventing leakage signals due to transmission signals from passing, and a LNA 83 for amplifying the reception signals of the DCS 1800 MHz band.

The GSM 900 receiver 524 includes a band pass filter 74 for passing reception signals of GSM 900 MHz band received through the main antenna and preventing leakage signals due to transmission signals from passing, and a LNA 84 for amplifying the reception signals of the GSM 900 MHz band.

The WCDMA 1900 (D) diversity receiver 525 includes a band pass filter 75 for passing WCDMA 1900 MHz diversity signals received through a sub-antenna and blocking leakage signals due to transmission signals, and a LNA 85 for amplifying the WCDMA 1900 MHz diversity signals.

The WCDMA 850 (D) diversity receiver 526 includes a band pass filter 76 for passing WCDMA 850 MHz diversity signals received through the sub-antenna and blocking leakage signals due to transmission signals, and a LNA 86 for amplifying the WCDMA 850 MHz diversity signals.

A duplexer unit 530 includes a first duplexer 531 connected to the WCDMA 1900 transmitter 511 and the receiver 521 for both WCDMA and PCS 1900, and a second duplexer 532 connected to the WCDMA 850 transmitter 512 and the receiver 522 for both WCDMA and GSM 850.

The first duplexer 531 outputs transmission signals of the WCDMA 1900 MHz band, which are output from the WCDMA 1900 transmitter 511, to the main antenna, and outputs reception signals of the WCDMA 1900 MHz band or the PCS 1900 MHz band received through the main antenna to the receiver 521 for both WCDMA and PCS 1900.

The second duplexer 532 outputs transmission signals of the WCDMA 850 MHz band, which are output from the WCDMA 850 transmitter 512, to the main antenna, and outputs reception signals of the WCDMA 850 MHz band or the GSM 850 MHz band received through the main antenna to the receiver 522 for both WCDMA and GSM 850.

A switch and power amplifier module 540 is connected to the DCS 1800/PCS 1900 transmitter 513 and the GSM 900/GSM 850 transmitter 514 of the transmission unit 510, and is connected to the DCS 1800 receiver 523 and the GSM 900 receiver 524 of the reception unit 520. The switch and power amplifier module 540 includes a transmission/reception and band selection switch 541 for transmitting/receiving signals and selecting bands for the signals, and a first power amplifier 542 and a second power amplifier 543 for amplifying power of the transmission signals.

The transmission/reception and band selection switch 541 performs a switching for selectively outputting transmission signals of the DCS 1800/PCS 1900 MHz band, which are output from the DCS 1800/PCS 1900 transmitter 513, and transmission signals of the GSM 900/GSM 850 MHz band, which are output from the GSM 900/GSM 850 transmitter 514 to the antenna. Further, the transmission/reception and band selection switch 541 performs a switching for outputting reception signals of the DCS 1800 MHz band received through the main antenna to the corresponding DCS 1800 receiver 523, and outputting reception signals of the GSM 900 MHz band received through the main antenna to the GSM 900 receiver 524. Furthermore, the transmission/reception and band selection switch 541 performs a switching for selecting a frequency band to be transmitted of the DCS 1800 MHz band and the PCS 1900 MHz band supported by the DCS 1800/PCS 1900 transmitter 513, and selecting a frequency band to be transmitted of the GSM 850 MHz band and the GSM 900 MHz band supported by the GSM 900/GSM 850 transmitter 514. The first power amplifier 542 amplifies power of the transmission signals of the DCS 1800 MHz band and the PCS 1900 MHz band output from the DCS 1800/PCS 1900 transmitter 513. The second power amplifier 543 amplifies power of the transmission signals of the GSM 850 MHz band and the GSM 900 MHz band output from the GSM 900/GSM 850 transmitter 514.

A first antenna switch 550 is connected to the duplexer unit 530 and the switch and power amplifier module 540, and performs a switching among the main antenna, the duplexer unit 530 and the switch and power amplifier module 540.

A second antenna switch 560 is connected to the diversity receivers 525 and 526, and performs a switching between the sub-antenna and the diversity receivers 525 and 526.

A first mixer 580 is connected to the receivers 521 and 522 for receiving the signals of the WCDMA 1900 MHz band, the WCDMA 850 MHz band, the PCS 1900 MHz band and the GSM 850 MHz band, i.e., the main reception band, and converts high-band frequencies received in the receivers 521 and 522 into low-band frequencies.

A second mixer 590 is connected to the receivers 523 to 526 for receiving the signals of the DCS 1800 MHz band and the GSM 900 MHz band and the diversity signals of the WCDMA 1900 MHz band and the WCDMA 850 MHz band, and converts high-band frequencies received in the receivers 523 to 526 into low-band frequencies.

The wireless transmission/reception apparatus according to the third embodiment of the present invention uses the receiver 521 for both WCDMA and PCS 1900 and the receiver 522 for both WCDMA and GSM 850 capable of receiving the signals of the same frequency band (1900 MHz or 850 MHz) even though service types (WCDMA/DCS or GSM) differ. When the LNA 81 of the receiver 521 for both WCDMA and PCS 1900 receives WCDMA 1900 signals, the LNA 81 amplifies the received WCDMA 1900 signals according to a WCDMA 1900 service scheme. Further, when the LNA 81 receives PCS 1900 signals, the LNA 81 amplifies the received PCS 1900 signals according to a PCS 1900 service scheme. When the LNA 82 of the receiver 522 for both WCDMA and GSM 850 receives WCDMA 850 signals, the LNA 82 amplifies the received WCDMA 850 signals according to a WCDMA 850 service scheme. Further, when the LNA 82 receives GSM 850 signals, the LNA 82 amplifies the received GSM 850 signals according to a GSM 850 service scheme. As described above, the embodiment of the present invention uses the LNAs 81 and 82 capable of amplifying reception signals (WCDMA signals or PCS signals, WCDMA signals or GSM signals) of different service schemes in the same band as described above, so that the number of the LNAs is reduced and it is not necessary to include separate receivers according to each service.

Further, the wireless transmission/reception apparatus according to the third embodiment of the present invention allows the receiver 521 for both WCDMA and PCS 1900 and the receiver 522 for both WCDMA and GSM 850, which correspond to the WCDMA 1900 MHz band, the WCDMA 850 MHz band, the PCS 1900 MHz band and the GSM 850 MHz band, i.e., the main reception band, to use the SAW filters 91 and 92 respectively, thereby further enhancing the receiver sensitivity of the main reception band.

Further, the wireless transmission/reception apparatus according to the third embodiment of the present invention uses one mixer 580 obtained by integrating mixers necessary for the receivers 521 and 522 of the main reception band and one mixer 590 obtained by integrating mixers necessary for the receivers 523 to 526 of the sub-reception band, thereby reducing the number of the mixers.

As described above, the wireless transmission/reception apparatus of the present invention uses one receiver capable of receiving different service signals of the same frequency band, so that the overall number of receivers can be reduced as compared with the number of receivers in an existing wireless transmission/reception apparatus. Further, the wireless transmission/reception apparatus of the present invention enables a duplexer used only in an existing FDD scheme (e.g., WCDMA scheme) to be also used in a TDD scheme (e.g., GSM 850 or PCS 1900 scheme).

Furthermore, the wireless transmission/reception apparatus of the present invention allows a receiver corresponding to a main reception band from among multiple receivers to use a SAW filter, thereby further enhancing the receiver sensitivity of the main reception band. Moreover, the wireless transmission/reception apparatus of the present invention uses one mixer obtained by integrating mixers in receivers of a main reception band and one mixer obtained by integrating mixers in receivers of a sub-reception band, thereby reducing the overall number of the mixers.

An embodiment of the present invention describes one exemplary case of using a receiver for receiving both WCDMA 1900 MHz signals and PCS 1900 MHz signals and a receiver for receiving both WCDMA 850 MHz signals and GSM 850 MHz signals. However, it is noted that signals of the same frequency band while corresponding to different services are not limited to the above-described specific signals.

While the present invention has been shown and described with reference to certain preferred embodiments thereof, it will be understood by those skilled in the art that various changes in form and details may be made therein without departing from the scope of the present invention as defined by the appended claims.

## Claims

1. A wireless transmission/reception apparatus for transmitting/receiving signals of multiple frequency bands according to multiple mobile communication services, the wireless transmission/reception apparatus comprising:
a transmission unit having a plurality of transmitters for transmitting the signals of the frequency bands of the mobile communication services through each transmitter; and
a reception unit having a plurality of receivers for receiving signals, which correspond to an equal frequency band from among the signals of the frequency bands of the mobile communication services, through at least one receiver for receiving radio signals of different service schemes of the equal frequency band, and receiving signals not corresponding to the equal frequency band from among the signals of the frequency bands according to the mobile communication services through receivers according to each frequency band.

2. The wireless transmission/reception apparatus as claimed in claim 1, wherein each receiver includes a LNA for amplifying the signals of the different service schemes of the equal frequency band according to the different service schemes.

3. The wireless transmission/reception apparatus as claimed in claim 1 or 2, further comprising a duplexer unit for separating transmission/reception signals of a FDD scheme and a TDD scheme from among the signals of the frequency bands of the mobile communication services.

4. The wireless transmission/reception apparatus as claimed in one of claims 1 to 3, wherein the frequency band according to the mobile communication services includes a WCDMA 2000 MHz band, a WCDMA 1900 MHz band, a WCDMA 850 MHz band, a GSM 850 MHz band, a GSM 900 MHz band, a DCS 1800 MHz band, and a PCS 1900 MHz band.

5. The wireless transmission/reception apparatus as claimed in one of claims 1 to 4, wherein the transmission unit comprises at least one of:
a WCDMA 2000 transmitter for transmitting signals of a WCDMA 2000 MHz band;
a WCDMA 1900 transmitter for transmitting signals of a WCDMA 1900 MHz band;
a WCDMA 850 transmitter for transmitting signals of a WCDMA 850 MHz band;
a DCS 1800/PCS 1900 transmitter for transmitting signals of a DCS 1800 MHz band and a PCS 1900 MHz band; and
a GSM 850/GSM 900 transmitter for transmitting signals of a GSM 850 MHz band and a GSM 900 MHz band.

6. The wireless transmission/reception apparatus as claimed in one of claims 1 to 5, wherein the receiver of each frequency band comprises at least one of:
a WCDMA 2000 receiver for receiving signals of a WCDMA 2000 MHz band;
a DCS 1800 receiver for receiving signals of a DCS 1800 MHz band; and
a GSM 900 receiver for receiving signals of a GSM 900 MHz band.

7. The wireless transmission/reception apparatus as claimed in one of claims 1 to 6, wherein the receiver comprises one of:
a WCDMA/PCS 1900 receiver for receiving both signals of a WCDMA 1900 MHz band and signals of a PCS 1900 MHz band; and
a WCDMA/GSM 850 receiver for receiving both signals of a WCDMA 850 MHz band and signals of a GSM 850 MHz band.

8. The wireless transmission/reception apparatus as claimed in one of claims 1 to 7, further comprising:
a first mixer for converting high frequency band signals received in receivers for receiving signals of a main reception band, which is a band having a high degree of use in a predetermined region from among the frequency bands according to the mobile communication services, into low frequency band signals; and
a second mixer for converting high frequency band signals received in receivers for receiving signals of a sub-reception band, which is a band having a low degree of use in the predetermined region from among the frequency bands according to the mobile communication services, into low frequency band signals.

9. The wireless transmission/reception apparatus as claimed in claim 8, wherein the sub-reception band includes a diversity band.

10. A control method for transmitting/receiving signals of multiple frequency bands according to multiple mobile communication services, wherein said method is adapted to control a wireless transmission/reception apparatus according to one of claims 1 to 9.
